# EUROPÄISCHE PATENTSCHRIFT

(11) **EP 0 490 145 B1**
(45) Veröffentlichungstag und Bekanntmachung des Hinweises auf die Patenterteilung: **03.09.1997**
(21) Anmeldenummer: 91119992.5
(22) Anmeldetag: 23.11.1991
(51) Int. Cl.: B32B 5/20, B32B 27/28, C08G 18/68

(54) **Polyvinylchlorid-Polyurethanschaumstoff-Verbundelemente, Verfahren zu ihrer Herstellung und zur Herstellung des Polyurethanschaumstoffs verwendbare flüssige, Urethangruppen enthaltende Polyisocyanatmischungen**
Polyvinylchloride-Polyurethane foam laminates, method for their manufacture and for the production of liquid polyisocyanate mixtures containing urethane groups for the manufacture of the polyurethane foams
Stratifié à base de mousse de chlorure de polyvinyle et de polyuréthane, procédé pour sa fabrication et procédé de fabrication de mélanges polyisocyanates liquides ayant de groupes uréthanes utilisés pour la fabrication de la mousse polyuréthane

(30) Priorität: 05.12.1990 DE 4038783
(43) Veröffentlichungstag der Anmeldung: 17.06.1992
(73) Patentinhaber: BASF Aktiengesellschaft, 67063 Ludwigshafen (DE)
(72) Erfinder: Horn, Peter, Dr., W-6900 Heidelberg (DE); Reich, Erhard, Dr., W-2845 Damme (DE); Adams, Stefan, Dr., W-6700 Ludwigshafen (DE); Chakrabarti, Sarbananda, W-6800 Mannheim 1 (DE)

(56) Entgegenhaltungen:
- EP-A- 0 073 517
- EP-A- 0 239 704
- EP-A- 0 315 920
- EP-A- 0 445 837
- DE-A- 2 732 292
- US-A- 4 182 898
- US-A- 4 581 384
- WORLD PATENTS INDEX LATEST Derwent Publications Ltd., London, GB; AN 87-224368

## Beschreibung

Gegenstände der Erfindung sind Verbundelemente, die bestehen aus
A) mindestens einer Deckschicht aus Polyvinylchlorid oder einem polyvinylchloridhaltigen Polymerisatgemisch und
B) einem Polyurethanschaumstoff, vorzugsweise einem halbharten oder harten Polyurethanschaumstoff,
   wobei mindestens einer der Bestandteile (A) oder (B) Einheiten eines α,β-olefinisch ungesättigten Polyesters mit einem Molekulargewichtsfaktor pro Doppelbindung von 150 bis 3000 enthält,
ein Verfahren zur Herstellung derartiger Verbundelemente und flüssige, Urethangruppen enthaltende Polyisocyanatmischungen zur Herstellung der Polyurethanschaumstoffe (B).

Verbundelemente, die bestehen aus einer Deckschicht, z.B. einer Kunststoffolie, aus Polyvinylchlorid oder einem polyvinylchloridhaltigen Polymerisatgemisch, z.B. ABS/PVC, und die mit einem Polyurethanschaumstoff - im folgenden auch abgekürzt PU-Schaumstoff genannt - z.B. einem weichelastischen oder halbharten PU-Schaumstoff, mit Hilfe eines Formwerkzeugs hinterschäumt wurden, sind seit langem bekannt und werden z.B. beschrieben im Kunststoff-Handbuch "Polyurethane" Band 7, 2. Auflage, 1983, herausgegeben von Dr. G. Oertel (Seiten 235 ff., Carl Hanser Verlag, München, Wien).

Verbundelemente dieser Art besitzen insbesondere in der Automobilindustrie eine große technische Bedeutung und finden Verwendung z.B. als Sitzkissen, Rückenlehnen, Nacken- und Armstützen, Sonnenblenden, Instrumententafeln, Armaturenbretter, Türseitenverkleidungen u.a.

Geeignete Deckschichten können nach bekannten Verfahren hergestellt werden. Polyvinylchlorid (PVC)-Folien können beispielsweise nach dem Powder-slush-Verfahren erhalten werden. Hierzu wird das Formwerkzeug in einem Ofen auf ungefähr 250°C erhitzt, danach das pulverförmige PVC gleichmäßig darauf verteilt und zum Ausgelieren der PVC-Folie das Formwerkzeug erneut im Ofen erwärmt. Nach dem Abkühlen des Formwerkzeugs, z.B. in einem Wasserbad, kann die Folie entnommen und zur Hinterschäumung eingesetzt werden. Nach einer anderen Verfahrensweise, dem Slush-moulding, wird ein Galvanowerkzeug vollständig mit einem PVC-Plastisol, das aus ca. 55 Gew.-% PVC, 35 Gew.-% Weichmacher und Hilfsstoffen sowie gegebenenfalls einer Farbpaste besteht, gefüllt. Beim Aufheizen des Formwerkzeuges wird das PVC-Plastisol an den Wandungen vorgeliert. Der Überschuß wird abgetrennt und die Gelierung bei 280 bis 350°C zu Ende geführt.

PVC/ABS, PVC/ABS/Polyvinylacetat-Polymerisatgemische werden zur Herstellung von großflächigen Deckschichten, z.B. für Armaturenbrett- oder Türseitenverkleidungen, Konsolen u.a., fast ausschließlich nach dem Vakuumtiefziehverfahren verarbeitet. Die aus Polymerisatgemischen bestehende Folien werden mit IR-Strahlern vorgeheizt und über Tiefziehwerkzeugen, z.B. aus Epoxidharzen oder Aluminium, vakuumverformt.

Zur Herstellung der Verbundelemente finden Deckschichten, vorzugsweise Folien, mit einer je nach Herstellungsverfahren unterschiedlichen Dicke von ungefähr 0,5 bis 3 mm, vorzugsweise von 0,8 bis 1,5 mm, Verwendung.

Mit PVC oder polyvinylchloridhaltigen Polymerisaten als Deckschicht versehene Verbundelemente zeigen beträchtliche Nachteile. Bekanntermaßen beginnt PVC bei einer thermischen Belastung allein sowie in Kombination mit UV-Licht sich schon ab 100°C merklich unter Chlorwasserstoffabspaltung zu zersetzen. Diese Zersetzung wird durch den PU-Schaumstoff, der Harnstoff-und Urethangruppen gebunden enthält, autokatalytisch beschleunigt (Vysokomol. soyed. A 30, Nr. 4, Seiten 829-833, 1988). Um lunkerfreie PU-Formkörper zu erhalten, werden vielfach zur Abstimmung einer kontrollierten Polyadditions- und Treibreaktion spezielle Aminkatalysatoren eingesetzt, die ebenfalls zum PVC-Abbau beitragen. So diffundieren Bestandteile, wie z.B. Katalysatoren, Stabilisatoren, u.a. aus dem PU-Schaumstoff in die Deckschicht und umgekehrt erfolgt eine Weichmachermigration aus der polyvinylchloridhaltigen Deckschicht in den PU-Schaumstoff. Durch diese Migrationsprozesse werden die Formkörper, z.B. durch Schwindungen oder Versprödungen, mechanisch geschädigt und verändern durch Verfärbung und Fleckenbildung ihr Aussehen (Kunststofftechnik, VDI-Verlag GmbH, Düsseldorf, 1987, Kunststoffe als Problemlöser im Automobilbau" Seiten 141 ff).

Es hat daher nicht an Versuchen gefehlt, die Zersetzung der PVC-haltigen Deckschichten zu verringern. Als geeignete Maßnahme hierfür hat sich nach Angaben der EP-A-0210440 und DE-A-27 32 292 (US-A-4 248 930) der Einsatz von in das Urethangerüst einbaubaren Katalysatoren auf Basis tertiärer Amine bewährt. Allerdings kann die Rückspaltung der Urethangruppierungen unter thermischer Belastung und dadurch die Abspaltung tertiärer Amine nicht vollständig eliminiert werden.

Als fortschrittlich erwies sich auch die Verwendung von Metallkatalysatoren gemäß DD-A-113 766 zur Herstellung der PU-Schaumstoffe.

Da die Windschutzscheiben in Automobilen zur Verringerung des Luftwiderstands stärker abgeflacht wurden, üblicherweise liegen die Neigungswinkel nunmehr bei ungefähr 70°, werden im Sommer, insbesondere im ruhenden Verkehr, Innentemperaturen im Fahrzeug, z.B. auf dem Armaturenbrett, von 120°C bis 130°C erreicht. Diese hohen Temperaturen führen, wie bereits dargelegt wurde, zu einer starken Versprödung der Deckschichten bis hin zum Bruch sowie zu Verfärbungen. Da in verstärktem Maße im Automobilbau Deckschichten mit den verschiedenartigsten Farbtönungen eingesetzt werden und mit der Verfärbung der Deckschicht auch in zahlreichen Fällen eine Verfärbung des PU-Schaumstoffs verbunden ist, der sich in einem Abfall der mechanischen Eigenschaften ausdrückt, wurden die mechanischen Anforderungen an derartige Verbundelemente erheblich verschärft. So werden zur Zeit von PVC/ABS-Folien Restdehnungswerte von 100 % absolut bei einer Lagerung im Umluftrockenschrank bei 120 bis 130°C über einen Zeitraum von 500 Stunden gefordert. Vielfach wird auch ein sogenannter Sonnensimulationstest durchgeführt. Die genannten Forderungen können mit den bekannten Verbundelementen nicht oder nur sehr unzureichend erfüllt werden.

Bekannt ist ferner die Herstellung von PU-Schaumstoffen aus zahlreichen Patent- und Literaturveröffentlichungen sowie die Herstellung von NCO-Gruppen enthaltenden Prepolymeren. Nach Angaben des US-A-4 182 898 werden beispielsweise Mischungen aus Polyester-polyolen und Polyoxyalkylen-polyolen mit Polyisocyanaten in einem NCO/OH-Verhältnis von 1,5:1 bis 2:1 zu NCO-Prepolymeren umgesetzt. Im Gegensatz hierzu werden gemäß US-A-4 647 596 aus Polyesterpolyether-polyolen, z.B. Copolymeren aus Polytetramethylenglykol und ε-Caprolacton, und Diphenylmethan-diisocyanat (MDI) NCO-Gruppen, enthaltende Prepolymere mit einem NCO-Gehalt von kleiner als 5 hergestellt.

Zur Herstellung von PU-Schaumstoffen finden nach Angaben der EP-A-239 704, Urethangruppen enthaltende Polyisocyanatmischungen mit einem NCO-Gehalt von 15 bis 32 Gew.-% Verwendung, die hergestellt werden durch Umsetzung eines Polyester-polyols mit einer Mischung aus 45 bis 95 Gew.-% MDI und 55 bis 5 Gew.-% eines Polyphenyl-polymethylen-polyisocyanats (PMDI) mit einer Funktionalität von 3 und mehr. Die EP-A-0 358 328 beschreibt ebenfalls Isocyanatmischungen, die enthalten 10 bis 90 Gew.-% eines NCO-Prepolymeren mit einer Funktionalität von 2,0 bis 2,3 auf Basis eines Polyester-polyols und 90 bis 10 Gew.-% eines NCO-Prepolymeren mit einer Funktionalität von 2,0 bis 2,3 auf Basis eines Polyoxyalkylen-polyols mit einem Ethylenoxidgehalt von 3 bis 50 Gew.-%. NCO-Prepolymere werden ferner gemäß DD 237 758 hergestellt durch Umsetzung von 4,4'-MDI mit verschiedenen Polyoxyalkylenpolyolen und gegebenenfalls Polyester-polyolen. Bekannt ist außerdem die Herstellung von Polyesterurethan-Schaumstoffen durch Umsetzung von Polyester-polyolen mit Polyisocyanaten in Gegenwart von Wasser. Zur Erhöhung des Quellungsvermögens derartiger Polyesterurethan-Schaumstoffe finden nach Angaben der DE-B-1 086 883 (US-A-2 990 378) Polyester-polyole Verwendung, zu deren Herstellung α,β-ungesättigte aliphatische Dicarbonsäuren eingesetzt werden.

Die Aufgabe der vorliegenden Erfindung bestand darin, Verbundelemente aus PVC-haltigen Deckschichten und PU-Schaumstoffen mit verbesserten mechanischen Eigenschaften zu entwickeln, d.h. die bekannten Verbundelementen anhaftenden Mängel sollten möglichst vollständig oder zumindest teilweise beseitigt werden.

Diese Aufgabe konnte überraschenderweise durch den Zusatz von α,β-olefinisch ungesättigten Polyestern zum PVC, den polyvinylchloridhaltigen Polymerisatgemischen oder den PU-Schaumstoffen gelöst werden.

Gegenstand der Erfindung sind Verbundelemente, die bestehen aus
A) mindestens einer Deckschicht aus Polyvinylchlorid oder einem polyvinylchloridhaltigen Polymerisatgemisch und
B) einem Polyurethanschaumstoff, vorzugsweise einem halbharten oder harten Polyurethanschaumstoff,
und dadurch gekennzeichnet sind, daß das Polyvinylchlorid oder das polyvinylchloridhaltige Polymerisatgemisch der Deckschicht (A), der Polyurethanschaumstoff (B) oder die Deckschicht (A) und der Polyurethanschaumstoff (B) Einheiten eines α,β-olefinisch ungesättigten Polyesters mit einer Funktionalität von 2 bis 6, einer Hydroxylzahl von 180 bis 800, einer Säurezahl von 0 bis 15 und einem Molekulargewichtsfaktor pro Doppelbindung von 150 bis 3000, vorzugsweise von 160 bis 800 enthalten.

Nach einer bevorzugten Ausführungsform werden die α,β-olefinisch ungesättigten Polyester mit dem vorgenannten Molekulargewichtsfaktor pro Doppelbindung in das Urethangerüst des Schaumstoffs gebunden und besitzen eine Funktionalität von 2 bis 4 und insbesondere von 2 bis 3,
eine Hydroxylzahl von 180 bis 700 und insbesondere von 180 bis 400 und
eine Säurezahl von 0 bis 4 und insbesondere von 0 bis 1.

Gegenstand der Erfindung ist ferner ein Verfahren zur Herstellung eines Verbundelements, das besteht aus
A) mindestens einer Deckschicht aus Polyvinylchlorid oder einem polyvinylchloridhaltigen Polymerisatgemisch und
B) einem Polyurethanschaumstoff,
   und dadurch gekennzeichnet ist, daß man die Deckschicht oder die α,β-olefinisch ungesättigten Polyester enthaltende Deckschicht (A) so in ein Formwerkzeug einlegt, daß dessen innere Oberfläche teilweise oder vollständig bedeckt ist,
   danach die Reaktionsmischung, die mindestens einen α,β-olefinisch ungesättigten Polyester gebunden enthält oder nicht enthält, zur Bildung des Polyurethanschaumstoffs in das Formwerkzeug einbringt und dort aufschäumen und aushärten läßt
   mit der Maßgabe, daß mindestens einer der Bestandteile (A) oder (B) des Verbundelements einen α,β-ungesättigten Polyester mit einem Molekulargewichtsfaktor pro Doppelbindung von 150 bis 3000 enthält.

Ein weiterer Gegenstand der Erfindung sind die zur Herstellung der PU-Schaumstoffe vorzüglich geeigneten flüssigen, Urethangruppen enthalten den Polyisocyanatmischungen auf Diphenylmethan-diisocyanat-basis mit einem Gehalt an Isocyanatgruppen von 15 bis 32 Gew.-%, die erhalten werden durch Umsetzung
einer Mischung aus Diphenylmethan-diisocyanaten und Polyphenyl-polymethylen-polyisocyanaten mit
mindestens einem α,β-olefinisch ungesättigten Polyester mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15
oder einer Mischung aus mindestens einem der obengenannten α,β-olefinisch ungesättigten Polyestern und mindestens einem Polyoxyalkylen-polyol mit einer Funktionalität von 2 bis 4 und einer Hydroxylzahl von 20 bis 400 oder
durch Umsetzung von 4,4'-Diphenylmethan-diisocyanat oder einer Mischung aus Diphenylmethan-diisocyanat-Isomeren, vorzugsweise einer Mischung aus 4,4'- und 2,4'-Diphenylmethan-diisocyanaten, mit
mindestens einem der obengenannten α,β-olefinisch ungesättigten Polyestern oder
einer Mischung aus mindestens einem der obengenannten α,β-olefinisch ungesättigten Polyester und mindestens einem Polyoxyalkylen-polyol mit einer Funktionalität von 2 bis 4 und einer Hydroxylzahl von 20 bis 400
und anschließendem Verdünnen des erhaltenen Urethangruppen enthaltenden Reaktionsprodukts mit einer Mischung aus Diphenylmethan-diisocyanaten und Polyphenyl-polymethylen-polyisocyanaten.

Verbundelemente mit sehr guten mechanischen Eigenschaften werden insbesondere erzielt, wenn die α,β-olefinisch ungesättigten Polyester in die Deckschicht (A) eingelagert und in dem PU-Schaumstoff (B) gebunden sind. Aus verarbeitungstechnischen Gründen und zur Erhöhung der Lagerstabilität der Polyurethanformulierungen hat es sich als vorteilhaft erwiesen, die Polyisocyanate mit den α,β-olefinisch ungesättigten Polyestern zu modifizieren und die erhaltenen flüssigen, sehr gut lagerbeständigen Urethangruppen enthaltenden Polyisocyanatmischungen in an sich bekannter Weise zu PU-Schaumstoffen umzusetzen. Auf diese Weise hergestellte PU-Schaumstoffe zeichnen sich überraschenderweise durch einen wesentlich verbesserten Restdehnungswert nach der Wärmelagerung aus. Selbst bei einer Lagerung bei 120°C über einen Zeitraum von 500 Stunden werden die PU-Schaumstoffe nur äußerst schwach verfärbt. Durch die erfindungsgemäße Maßnahme wird auch die Verfärbung der PVC-haltigen Deckschicht(en) beträchtlich reduziert.

Durch den Zusatz der α,β-olefinisch ungesättigten Polyester wird ferner die Haftung zwischen der PVC-haltigen Deckschicht und dem PU-Schaumstoff außerordentlich verbessert, so daß auf den Zusatz von Haftvermittlern oder Klebstoffen zur Herstellung der Verbundelemente verzichtet werden kann.

Vorteilhaft ist ferner, daß die erfindungsgemäß geeigneten PU-Schaumstoffe unter Verwendung von Metallkatalysatoren hergestellt werden können, so daß völlig aminfreie PU-Schaumstoffe gebildet werden.

Die erfindungsgemäßen Verbundelemente und die Deckschichten oder der PU-Schaumstoff zu ihrer Herstellung enthalten, wie bereits ausgeführt wurde, α,β-olefinisch ungesättigte Polyester mit den vorgenannten Kenndaten. Geeignete ungesättigte Polyester können bei 23°C fest sein und eine amorphe, teilkristalline oder kristalline Struktur aufweisen. Derartige, bei 23°C feste ungesättigte Polyester finden zweckmäßigerweise Verwendung zur Modifizierung der Deckschicht (A) aus PVC oder einem polyvinylchloridhaltigen Polymerisatgemisch. Vorzugsweise Verwendung finden jedoch bei 23°C flüssige, α,β-olefinisch ungesättigte Polyester als Aufbaukomponente zur Herstellung der PU-Schaumstoffe. Da die α,β-olefinisch ungesättigten Polyester üblicherweise mit höhermolekularen Polyhydroxylverbindungen, insbesondere Polyoxyalkylen-polyolen, nicht ausreichend mischbar sind, so daß es zur Bildung verarbeitbarer homogener Mischungen des Zusatzes geeigneter Emulgatoren bedarf, und die Mischungen nur unzureichend lagerstabil sind, d.h. die Steigzeit und Abbindezeit der PU-Schaumstoffe verändern sich mit zunehmender Lagerzeit, werden die α,β-olefinisch ungesättigten Polyester insbesondere zur Modifizierung der organischen Polyisocyanate verwendet.

Zu den zur Herstellung der erfindungsgemäßen Verbundelemente geeigneten Aufbaukomponenten und den Ausgangsstoffen zur Herstellung der modifizierten Urethangruppen enthaltenden Polyisocyanate auf Basis von MDI, PMDI oder Roh-MDI sowie der PU-Schaumstoffe ist folgendes auszuführen:

Als α,β-olefinisch ungesättigten Polyester mit einem Molekulargewichtsfaktor pro Doppelbindung von 150 bis 3000 eignen sich die bekannten Polykondensationsprodukte aus mehrwertigen, vorzugsweise zweiwertigen Carbonsäuren und deren veresterbaren Derivaten, die mit mehrwertigen, vorzugsweise zweiwertigen Alkoholen esterartig verknüpft sind und gegebenenfalls Reste einwertiger Carbonsäuren oder einwertiger Alkohole oder Reste von Hydroxycarbonsäuren enthalten, wobei zumindest ein Teil der Reste über ethylenisch ungesättigte Gruppen verfügen muß.

Geeignete Carbonsäuren sind vorzugsweise olefinisch ungesättigte Dicarbonsäuren, insbesondere solche mit 4 bis 5 Kohlenstoffatomen und ihre Mono- und/oder Diester mit niedermolekularen Alkoholen oder ihre Anhydride. Beispielhaft genannt seien Maleinsäure, Fumarsäure, Itaconsäure, Citraconsäure, Methylenglutarsäure und Mesaconsäure sowie die entsprechenden Ester und Anhydride und vorzugsweise Maleinsäure, Maleinsäureanhydrid und Fumarsäure. In die olefinisch ungesättigten Polyester können weiterhin zusätzlich andere modifizierend wirkende ungesättigte oder gesättigte aliphatische, aromatische oder heterocyclische Dicarbonsäuren wie z.B. Bernsteinsäure, Glutarsäure, Methylglutarsäure, Adipinsäure, Sebacinsäure, Pimelinsäure, o-Phthalsäure, Isophthalsäure, Terephthalsäure, Dihydrophthalsäure, Tetrahydrophthalsäure, methylierte Tetrahydrophthalsäure, 3,6-Endomethylen-1,2,3,6-tetrahydrophthalsäure, Endomethylen-tetrachlorphthalsäure oder Hexachlorendomethylen-tetrahydrophthalsäure einkondensiert sein. Zur Modifizierung können ferner Monocarbonsäuren, wie z.B. Ethylhexansäure, Fettsäuren, Essigsäure, Propionsäure, Benzoesäure oder 3- und höherbasische Carbonsäuren wie z.B. 1,2,4-Benzoltricarbonsäure oder 1,2,4,5-Benzoltetracarbonsäure Verwendung finden.

Als mehrwertige Alkohole eignen sich die üblichen Alkandiole, vorzugsweise mit 2 bis 8 Kohlenstoffatomen, Alkendiole und Oxalkandiole. Beispielhaft genannt seien Ethandiol, Propandiol-1,3 und -1,2, Butandiol-1,4 und -1,3, Hexandiol-1,6, 2,2-Dimethylpropandiol-1,3, Cyclohexandiol-1,2, 2,2-Bis-(p-hydroxy-cyclohexyl)-propan, 1,4-Bis-methylolcyclohexan, Vinylglykol, Trimethylolpropanmonoallylether, Butendiol-1,4, Diethylenglykol, Triethylenglykol, Polyoxyethylenglykol, Dipropylenglykol, Tripropylenglykol und Polyoxypropylenglykol. Ferner können auch einwertige, 3- oder höherwertige Alkohole wie z.B. Ethylhexanol, Fettalkohole, Benzylalkohol, 1,2-Di-(allyloxyl)-propanol-3, Glycerin, Pentaerythrit oder Trimethylolpropan in untergeordneten Mengen mitverwendet werden. Die mehrwertigen Alkohole werden im allgemeinen in stöchiometrischen Mengen mit den mehrbasischen, insbesondere zweibasischen Carbonsäuren bzw. ihren kondensierbaren Derivaten umgesetzt. Diese ungesättigten Polyester werden im allgemeinen durch Schmelzkondensation oder Kondensation unter azeotropen Bedingungen bei Temperaturen von 140 bis 260°C, vorzugsweise von 160 bis 240°C in diskontinuierlichen oder kontinuierlichen Verfahren, gegebenenfalls in Gegenwart von Veresterungskatalysatoren aus ihren Ausgangskomponenten hergestellt. Bezüglich der Zusammensetzung der α,β-olefinisch ungesättigten Polyester sei ferner beispielsweise auf die Monographie von H.V. Bönig, Unsaturated Polyesters, Structure and Properties, Amsterdam, 1964, verwiesen.

Wie bereits ausgeführt wurde, finden zur Einbindung in den PU-Schaumstoff mindestens difunktionelle α,β-olefinisch ungesättigte Polyester Verwendung, während zur Modizierung des PVC oder der polyvinylchloridhaltigen Polymerisatgemische als Deckschicht (A) vorzugsweise höhermolekulare α,β-olefinisch ungesättigte Polyester mit inaktiven Endgruppen eingesetzt werden, die gleichzeitig als Weichmacher wirken. Durch den Einsatz der weichmachend wirkenden ungesättigten Polyester in der Deckschicht und den Einbau der α,β-olefinisch ungesättigten Polyester in den PU-Schaumstoff wird ihre vorteilhafte Wirkung im Verbundelement, insbesondere die Haftung, zusätzlich verstärkt.

Um die erfindungsgemäß verwendbaren α,β-olefinisch ungesättigten Polyester zu stabilisieren und dadurch eine unerwünschte Polymerisation (Gelierung) zu unterdrücken, hat es sich als zweckmäßig erwiesen, diesen bereits bei der Herstellung Polymerisationsinhibitoren und/oder Antioxidantien einzuverleiben. Derartige Stabilisatoren werden beispielsweise beschrieben in "Methoden der Organischen Chemie" - Houben-Weyl, Georg Thieme Verlag, Stuttgart, 1961). Als Stabilisator sehr gut geeignet ist z.B. Hydrochinon, das üblicherweise in einer Konzentration von 50 bis 200 ppm, bezogen auf das Gewicht des α,β-olefinisch ungesättigten Polyesters, eingesetzt wird.

Die Deckschichten (A) zur Herstellung der Verbundelemente bestehen aus PVC oder einem polyvinylchloridhaltigen Polymerisat, wie z.B. PVC/ABS, PVC/PUR, PVC/ABS/Polyvinylacetat, Vinylchlorid/Methacrylat/Butadien/Styrol-copolymerisat oder Ethylen/Vinylacetat/Vinylchlorid-Pfropfcopolymerisat. Besonders bewährt haben sich als Deckschichten (A) PVC- und PVC/ABS-Folien, so daß diese vorzugsweise Verwendung finden.

Sofern zur Herstellung der Verbundelemente die mit den erfindungsgemäß verwendbaren α,β-olefinisch ungesättigten Polyestern modifizierte Deckschichten Anwendung finden, wird der olefinisch ungesättigte Polyester, der vorzugsweise in einer pastösen oder über 30°C erweichenden Form vorliegt, üblicherweise in eine Menge von 1 bis 30 Gew.-%, vorzugsweise von 5 bis 20 Gew.-% und insbesondere von 3 bis 15 Gew.-% bezogen auf das Gewicht der Deckschicht (A), zweckmäßigerweise bei der Herstellung der Deckschicht, vorzugsweise der Folie, in das PVC oder polyvinylchloridhaltige Polymerisatgemisch homogen, z.B. mit Hilfe eines Extruders, eingearbeitet.

Nach einer bevorzugten Ausführungsform werden jedoch die PU-Schaumstoffe, die vorzugsweise hart oder insbesondere halbhart sind, mit den α,β-olefinisch ungesättigten Polyestern in einer Menge von 1 bis 30 Gew.-%, vorzugsweise 3 bis 15 Gew.-% und insbesondere 4 bis 10 Gew.-% modifiziert. Hierzu Anwendung finden vorzugsweise bei 23°C flüssige, α,β-olefinisch ungesättigte Polyester, die mit NCO-Gruppen reaktive Wasserstoffatome gebunden enthalten und über diese im PU-Schaumstoff gebunden werden.

Da die α,β-olefinisch ungesättigten Polyester mit Polyoxyalkylen-polyolen üblicherweise nur in untergeordneten Mengen mischbar sind, hat es sich als zweckmäßig erwiesen die organischen Polyisocyanate partiell mit den geeigneten olefinisch ungesättigten Polyestern umzusetzen und die erhaltenen bei Raumtemperatur flüssigen, mit Urethangruppen modifizierten Polyisocyanatmischungen zur Herstellung der PU-Schaumstoffe für die Verbundelemente zu verwenden.
a) Zur Herstellung der PU-Schaumstoffe insbesondere bewährt haben sich und daher vorzugsweise Verwendung finden flüssige Urethangruppen enthaltende Polyisocyanatmischungen auf MDI-Basis mit einem Gehalt an Isocyanatgruppen von 15 bis 32 Gew.-%, vorzugsweise von 22 bis 31 Gew.-% und insbesondere von 25 bis 29 Gew.-%, bezogen auf das Gesamtgewicht, die erhältlich sind durch Umsetzung
   einer Mischung, bestehend aus MDI-Isomeren und Polyphenyl-polymethylen-polyisocyanaten (PMDI), sogenanntem Roh-MDI, mit
   mindestens
   einem α,β-olefinisch ungesättigten Polyester mit einem Molekulargewichtsfaktor pro Doppelbindung von 150 bis 3000, vorzugsweise von 160 bis 800, einer Funktionalität von 2 bis 6, vorzugsweise von 2 bis 4 und insbesondere von 2 bis 3, einer Hydroxylzahl von 20 bis 800, vorzugsweise von 80 bis 700 und insbesondere von 180 bis 400 und einer Säurezahl von 0 bis 15, vorzugsweise von 0 bis 4 und insbesondere von 0 bis 1.
   oder einer Mischung aus mindestens einem der obengenannten α,β-olefinisch ungesättigten Polyestern und mindestens einem Polyoxyalkylen-polyol, vorzugsweise einem Polyoxypropylen-polyol oder Polyoxypropylen-polyoxyethylen-polyol, mit einer Funktionalität von 2 bis 4, vorzugsweise von 2 bis 3 und einer Hydroxylzahl von 20 bis 400, vorzugsweise von 100 bis 300
   oder durch Umsetzung von 4,4'-MDI oder einer Mischung aus MDI-Isomeren, vorzugsweise einer Mischung aus 4,4'- und 2,4'-MDI mit
   mindestens einem der obengenannten α,β-olefinisch ungesättigten Polyestern oder
      einer Mischung aus mindestens einem der vorgenannten α,β-olefinisch ungesättigten Polyestern und mindestens einem der vorgenannten Polyoxyalkylen-polyole und
      anschließendem Verdünnen des erhaltenen Urethangruppen enthaltenden Reaktionsproduktes mit einer Mischung aus Roh-MDI.

   Zur Herstellung der flüssigen, Urethangruppen enthaltenden Polyisocyanatmischungen eignen sich die handelsüblichen Roh-MDI. Vorteilhafterweise Verwendung finden jedoch Roh-MDI mit einem MDI-Isomerengehalt von 30 bis 70 Gew.-% vorzugsweise von 30 bis 55 Gew.-%.
   Vorzüglich bewährt haben sich ferner MDI-Isomerenmischung, die enthalten
   48 bis 96 Gew.-%, vorzugsweise 50 bis 90 Gew.-% 4,4'-MDI,
   52 bis 2 Gew.-%, vorzugsweise 50 bis 10 Gew.-% 2,4'-MDI und
   0 bis 2 Gew.-%, vorzugsweise 0 bis 1,5 Gew.-% 2,2'-MDI,
      wobei die Gew.-% bezogen sind auf das Gesamtgewicht der MDI-Isomerenmischung.

   Wie bereits ausgeführt wurde, können 4,4'-MDI, die MDI-Isomerenmischungen oder Roh-MDI mit den α,β-olefinisch ungesättigten Polyestern oder diesen und Polyoxyalkylen-polyolen modifiziert werden. Sofern Mischungen aus α,β-olefinisch ungesättigten Polyestern und Polyoxyalkylen-polyolen eingesetzt werden, enthalten diese, bezogen auf das Gesamtgewicht, zweckmäßigerweise
   5 bis 95 Gew.-% vorzugsweise 50 bis 90 Gew.-% mindestens eines α,β-olefinisch ungesättigten Polyesters und
   95 bis 5 Gew.-%, vorzugsweise 50 bis 10 Gew.-% eines oder mehrerer Polyoxyalkylen-polyole.

   Anstelle der Mischungen können die α,β-olefinisch ungesättigten Polyester und Polyoxyalkylen-polyole jedoch auch stufenweise mit den MDI-Isomeren und/oder -Homologen zur Reaktion gebracht werden, wobei die Reihenfolge der Zugabe z.B. zuerst der α,β-olefinisch ungesättigte Polyester und danach das Polyoxyalkylen-polyol oder umgekehrt, im allgemeinen von sekundärer Bedeutung ist.
   Zur Herstellung der flüssigen, Urethangruppen enthaltenden Polyisocyanatmischungen werden das 4,4'-MDI, die MDI-Isomerenmischungen oder das Roh-MDI und α,β-olefinisch ungesättigten Polyester oder Mischungen aus α,β-olefinisch ungesättigten Polyestern und Polyoxyalkylen-polyolen bei Temperaturen von ungefähr 0 bis 100°C, vorzugsweise von 30 bis 80°C und einer Reaktionszeit von 0,5 bis 6 Stunden, vorzugsweise von 1 bis 3 Stunden, in einer solchen Menge zur Reaktion gebracht, daß das Verhältnis von NCO-Gruppen zu OH-Gruppen größer als 2, vorzugsweise größer als 4 und insbesondere 6,3 bis 81 ist.
   Sofern zur Modifizierung 4,4'-MDI oder 4,4'- und 2,4'-MDI-Mischungen eingesetzt werden, läßt man die Urethangruppen enthaltende MDI-Mischung gegebenenfalls teilweise oder vollständig, z.B. bis auf Raumtemperatur, abkühlen und verdünnt sie mit Roh-MDI bis zum gewünschten NCO-Gehalt im Bereich von 15 bis 32 Gew.-%.
   Zur Herstellung der flüssigen, Urethangruppen enthaltenden Polyisocyanatmischungen werden, wie bereits ausgeführt wurde, vorteilhafterweise Roh-MDI mit einem MDI-Isomerengehalt von 30 bis 70 Gew.-% eingesetzt. Als α,β-olefinisch ungesättigter Polyester findet insbesondere ein solcher mit einer Hydroxylzahl von ungefähr 336 und einer Säurezahl von ungefähr 0,7 Verwendung, der hergestellt wird durch Polykondensation von Maleinsäureanhydrid, 1,3-Propandiol und Diethylenglykol im Molverhältnis 1:1:1. Bei Verwendung von ungesättigten Polyestern und Polyoxyalkylen-polyolen oder Mischungen davon zur Modifizierung der Polyisocyanatmischungen finden als Polyoxyalkylen-polyole insbesondere solche mit einer Funktionalität von 2 bis 3 und einer Hydroxylzahl von 20 bis 400 Verwendung, die bestehen aus Polyoxypropylen-polyolen oder Polyoxypropylen-polyoxyethylen-polyolen.
   Zur Reduzierung der Viskosität der Urethangruppen enthaltenden Polyisocyanatmischungen und Verbesserung ihrer Verarbeitbarkeit hat es sich bei Verwendung von Roh-MDI als Ausgangsstoff als vorteilhaft erwiesen, diesem zusätzlich 2,4'-MDI einzuverleiben, so daß dessen 2,4'-MDI-Gehalt bezogen auf das Roh-MDI 50 bis 10 Gew.-% beträgt.
   Zur Senkung der Viskosität können in die Urethangruppen enthaltenden Polyisocyanatmischungen ferner vor, während oder nach ihrer Herstellung Mittel zur Verbesserung der Fließfähigkeit eingebracht werden. Als derartige Fließverbesserer seien beispielsweise genannt: langkettige Fettsäuren, wie z.B. Rizinolsäure oder Ölsäure, Stearinsäureester und vorzugsweise Alkylepoxistearate. Außerdem können die Produkte mit Antioxidantien und UV-Stabilisatoren, z.B. mit Benzophenonstruktur, stabilisiert werden.
   Sofern die Verbundelemente eine Deckschicht (A) aus mit α,β-olefinisch ungesättigten Polyestern modifiziertem PVC oder polyvinylchloridhaltigen Polymerisatgemisch besitzen, können zur Herstellung der PU-Schaumstoffe (B) die an sich bekannten organischen, beispielsweise aliphatischen, cycloaliphatischen, araliphatischen und vorzugsweise aromatischen Polyisocyanate Verwendung finden.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4-und 2,6-Toluylen-diisocyanat und die entsprechenden Isomerengemische, 4,4'-, 2,4'- und 2,2'-MDI und die entsprechenden Isomerengemische, Mischungen aus 4,4'- und 2,4'-MDI, PMDI, Mischungen aus 4,4'-, 2,4'- und 2,2'-Diphenylmethan-diisocyanaten und Polyphenyl-polymethylen-polyisocyanaten (Roh-MDI), vorzugsweise solche mit einem Diphenylmethan-diisocyanat-Isomerengehalt von 30 bis 80 Gew.%, bezogen auf das Roh-MDI-Gewicht und Mischungen aus Roh-MDI und Toluylen-diisocyanaten. Die organischen Di- und Polyisocyanate können einzeln oder in Form von Mischungen eingesetzt werden.
   Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1800 modifiziertes 4,4'-MDI oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylenpolyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen gesättigten Polyester- und/oder vorzugsweise Polyether-polyolen und 4,4'-MDI, Mischungen aus 2,4'- und 4,4'-MDI, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.%, vorzugsweise 31 bis 21 Gew.%, bezogen auf das Gesamtgewicht, z.B. auf Basis von 4,4'-, 2,4'- und/oder 2,2'-MDI und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-MDI, PMDI, Roh-MDI, 2,4- und/oder 2,6-Toluylen-diisocyanat gegebenenfalls gemischt werden.
   Zur Herstellung der vorzugsweise verwendeten halbharten und harten PU-Schaumstoffe hat sich als aromatisches Polyisocyanat insbesondere Roh-MDI bewährt.
b) Als höhermolekulare Polyhydroxylverbindungen b) mit mindestens zwei reaktiven Wasserstoffatomen werden zweckmäßigerweise solche mit einer Funktionalität von 2 bis 8 und einer Hydroxylzahl von 25 bis 800 verwendet. Bewährt haben sich z.B. Polyhydroxylverbindungen ausgewählt aus der Gruppe der Polyether-polyole, Polyester-polyole, hergestellt aus Alkandicarbonsäuren und mehrwertigen Alkoholen, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder insbesondere Polyether-polyole.
   Geeignete Polyester-polyole können beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und aromatischen Polycarbonsäuren und mehrwertigen Alkoholen, vorzugsweise Diolen, mit 2 bis 12 Kohlenstoffatomen, vorzugsweise 2 bis 6 Kohlenstoffatomen und/oder Alkylenglykolen hergestellt werden. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole oder Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die Mischungen aus aromatischen und aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und eine Hydroxylzahl von 25 bis 800, vorzugsweise 120 bis 400 und insbesondere 180 bis 300
   Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure und vorzugsweise mehrwertige, insbesondere zwei- bis achtwertige Alkohole oder Dialkylenglykole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.
   Die Polyether-polyole, vorzugsweise Polyoxypropylen- und Polyoxypropylen-polyoxyethylen-polyole, besitzen zur Herstellung von halbharten PU-Schaumstoffen eine Funktionalität von vorzugsweise 2 bis 4 und insbesondere 2 und/oder 3 und Hydroxylzahlen von vorzugsweise 20 bis 400 und insbesondere 25 bis 300 und geeignete Polyoxytetramethylenglykole eine Hydroxylzahl bis ungefähr 56 und zur Herstellung von harten PU-Schaumstoffen eine Funktionalität von vorzugsweise 3 bis 8, und insbesondere 3 bis 6 und eine Hydroxylzahl von vorzugsweise 180 bis 800 und insbesondere 200 bis 500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Zur Herstellung von elastischen, halbharten oder harten PU-Schaumstoffen kann es z.B. Zweckmäßig sein, geeignete Mischungen aus Polyether-polyolen mit Hydroxylzahlen bis 80 und solchen mit Hydroxylzahlen von 200 bis 500 zu verwenden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
c) Die PU-Schaumstoffe können ohne oder unter Mitverwendung von Kettenverlängerungs-und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern Kettenverlängerungsmittel, Vernetzungsmittel oder Mischungen davon Anwendung finden, kommen diese zweckmäßigerweise in Mengen von 2 bis 60 Gew.%, vorzugsweise 8 bis 50 Gew.% und insbesondere 10 bis 40 Gew.%, bezogen auf das Gewicht der Komponenten (b) und (c) zum Einsatz.
d) Zu Treibmitteln (d), welche zur Herstellung der PU-Schaumstoffe verwendet werden können, gehört vorzugsweise Wasser, das mit Isocyanatgruppen unter Bildung von Kohlendioxid als Treibgas reagiert. Die Wassermengen, die zweckmäßigerweise eingesetzt werden, betragen 0,1 bis 8 Gew.-Teile, vorzugsweise 1,0 bis 3,5 Gew.-Teile und insbesondere 2,0 bis 3,0 Gew.-Teile, bezogen auf 100 Gew.-Teile der höhermolekularen Verbindungen mit mindestens zwei reaktiven Wasserstoffatomen (b).
   Anstelle von Wasser können in vorteilhafter Weise auch sauer reagierende Pufferlösungen, vorzugsweise solche mit einem pH-Wert von 1,6 bis 3,8 eingesetzt werden.
   Als Treibmittel eignen sich ferner Carbonsäuren, wie z.B. Ameisen- oder Essigsäure, oder tertiäre Alkohole, die mindestens ein Wasserstoffatom enthalten, das an den unmittelbar an die Carbinolgruppe gebundenen Kohlenstoff gebunden ist, wie z.B. tert. Butanol.
   Im Gemisch mit Wasser oder den Pufferlösungen oder als alleinige Treibmittel können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, technische Pentangemische, n- und iso-Butan, Propan, Cyclopentan und Cyclohexan, Ether, wie Furan, Dimethylether und Diethylether, Ketone, wie Aceton und Methylethylketon, Ester wie Ethylacetat und Methylformiat und vorzugsweise halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1,1,1-Chlordifluorethan, Dichlortetrafluorethan, Tetrafluorethan, 1,1,2-Trichlor-1,2,2-trifluorethan und Heptafluorpropan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.
   Die erforderliche Menge an physikalisch wirkenden Treibmitteln kann in Abhängigkeit von der gewünschten Schaumstoffdichte auf einfache Weise ermittelt werden und beträgt 0 bis ungefähr 30 Gew.-Teile, vorzugsweise 0 bis 20 Gew.-Teile pro 100 Gew.-Teile der höhermolekularen Verbindungen (b), wobei sich ihr Anteil bei der Mitverwendung von Wasser oder Pufferlösung anteilmäßig verringert. Gegebenenfalls kann es zweckmäßig sein, die gegebenenfalls modifizierten Polyisocyanate (a) mit dem physikalisch wirkenden Treibmittel zu mischen und dadurch ihre Viskosität zu verringern.
e) Zur Beschleunigung der Umsetzung zwischen den höhermolekularen Verbindungen mit mindestens zwei reaktiven Wasserstoffatomen (b), hydroxylgruppenhaltigen Kettenverlängerungs- oder Vernetzungsmitteln (c) und Wasser als Treibmittel (d) und den organischen Polyisocyanaten und/ oder modifizierten Polyisocyanaten (a) werden der Reaktionsmischung übliche Polyurethankatalysatoren einverleibt. Geeignete Polyurethankatalysatoren sind beispielsweise tertiäre Amine, wie Dimethylbenzylamin, Dicyclohexylmethylamin, Dimethylcyclohexylamin, N,N,N'N'-Tetramethyl-diamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethyl-aminoethoxy)ethanol, N,N',N''-Tris-(dialkylaminoalkyl)-hexahydrotriazin, z.B. N,N',N''-Tris-(dimethylaminopropyl)-s-hexahydrotriazin, Di-(4-dimethylaminocyclohexyl)-methan und insbesondere Triethylendiamin.
   Da es sich jedoch als zweckmäßig erwiesen hat, die PU-Schaumstoffe in Abwesenheit von Verbindungen mit tertiären Aminogruppen herzustellen, finden als Polyurethankatalysatoren vorzugsweise Metallsalze Verwendung. Beispielhaft genannt seien Metallsalze wie Eisen(II)chlorid, Zinkchlorid, Bleioctoat, Zinndioctoat, Zinndiethylhexoat, Dibutyldilaurylzinnmercaptid, Dibutylzinndilaurat und vorzugsweise Alkalisalze von organischen Carbonsäuren, wie z.B. Kaliumformiat und Kaliumacetat. Eingesetzt werden üblicherweise 0,1 bis 5 Gew.-% vorzugsweise 0,3 bis 3,5 Gew.-% Metallsalze als Polyurethankatalysator, bezogen auf das Gewicht der höhermolekularen Verbindungen (b).
f) Der Reaktionsmischung zur Herstellung der PU-Schaumstoffe können gegebenenfalls auch noch Hilfsmittel und/oder Zusatzstoffe (f) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.
   In Betracht, kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 8, vorzugsweise 0,4 bis 5 Gew.-Teilen pro 100 Gew.-Teilen der höhermolekularen Verbindungen (b) angewandt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Schaumstoffe bzw. PVC/PU-Schaumstoff-Verbundelemente werden die organischen, vorzugsweise modifizierten Polyisocyanate (a), die höhermolekularen Polyhydroxylverbindungen mit mindestens zwei reaktiven Wasserstoffatomen (b) und gegebenenfalls die Kettenverlängerungs-und/oder Vernetzungsmittel (c) in Gegenwart von Treibmitteln (d), Katalysatoren (e) und gegebenenfalls Hilfsmitteln und/oder Zusatzstoffen (f) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (b) und (c) vorliegen und, sofern Wasser als Treibmittel eingesetzt wird, das Molverhältnis von Äquivalente Wasser zu Äquivalente NCO-Gruppe 0,5 bis 5:1, vorzugsweise 0,7 bis 0,95:1 und insbesondere 0,75 bis 0,85:1 beträgt.

Die PU-Schaumstoffe bzw. PU-Schaumstoffe der Verbundelemente werden zweckmäßigerweise nach dem one shot-Verfahren durch Vermischen von zwei Komponenten A und B hergestellt, wobei die Ausgangskomponenten (b) bis (e) und gegebenenfalls (f) zu der sogenannten A-Komponente vereinigt und als B-Komponente die Ausgangskomponente (a) gegebenenfalls im Gemisch mit (f), und inerten, physikalisch wirkenden Treibmitteln verwendet werden. Somit müssen die A- und B-Komponente vor der Herstellung der PU-Schaumstoffe nur noch intensiv gemischt werden. Die Reaktionsmischungen können in offenen oder geschlossenen Formwerkzeugen verschäumt werden.

Zur Herstellung des Verbundelements wird die Deckschicht (A), die, wie bereits ausgeführt wurde, aus PVC oder einem polyvinylchloridhaltigen Polymerisatgemisch oder einem mit α,β-olefinisch ungesättigtem Polyester modifizierten PVC oder modifiziertem polyvinylchloridhaltigen Polymerisatgemisch besteht, in ein zweckmäßigerweise temperierbares, vorzugsweise metallisches Formwerkzeug so eingelegt, daß dessen innere Oberfläche teilweise oder vollständig bedeckt ist. Die Formwerkzeugtemperatur beträgt üblicherweise 20 bis 90°C, vorzugsweise 35 bis 70°C. Die Reaktionsmischung, die vorzugsweise mindestens einen α,β-olefinisch ungesättigten Polyester gebunden enthält oder ohne diese Modifikation vorliegt, wird danach zur Bildung des PU-Schaumstoffs in den verbliebenen Formwerkzeughohlraum eingebracht und dort aufschäumen und aushärten gelassen. Die Reaktionsmischung besitzt üblicherweise eine Temperatur von 23 bis 80°C, vorzugsweise von 35 bis 60°C und wird zweckmäßigerweise in einer solchen Menge in das Formwerkzeug eingebracht, daß sich im geschlossenen Formwerkzeug ein Verdichtungsgrad von 1,1 bis 6, vorzugsweise von 1,1 bis 3 und insbesondere von 1,1 bis 1,5 einstellt.

Die erfindungsgemäßen Verbundelemente, bei denen mindestens einer der Bestandteile (A) oder (B), nämlich die Deckschicht oder der PU-Schaumstoff mindestens einen α,β-ungesättigten Polyester mit einem Molekulargewichtsfaktor pro Doppelbindung von 150 bis 3000 enthält, können nach 3 bis 10 Minuten, vorzugsweise 3 bis 5 Minuten entformt werden.

Sie besitzen Gesamtdichten von 30 bis 800 g/Liter, vorzugsweise von 80 bis 150 g/Liter und weisen ein sehr gutes mechanisches Eigenschaftsniveau auf. Die Verbundelemente finden vorzugsweise Verwendung im Innenbereich von Verkehrsmitteln, insbesondere in Kraftfahrzeugen, z.B. als Armlehnen, Kopfstützen, Sonnenblenden, Armaturentafeln, Ablagebehälter oder -fächer und Sicherheitsabdeckungen.

Die flüssigen, mit α,β-olefinisch ungesättigten Polyestern modifizierten, Urethangruppen enthaltenden Polyisocyanatmischungen finden Verwendung als Polyisocyanatkomponente zur Herstellung von Polyisocyanat-polyadditions-produkten, z.B. von weichelastischen oder vorzugsweise halbharten und harten PU-Schaumstoffen. Sie eignen sich ferner zum Vermischen mit flüssigen Urethangruppen enthaltenden Quasiprepolymeren, hergestellt aus den vorgenannten organischen, vorzugsweise aromatischen Polyisocysanaten, wie z.B. Toluylen-diisocyanat, MDI, PMDI oder Roh-MDI und Polyoxyalkylenpolyolen, vorzugsweise Polyoxypropylen-polyolen oder Polyoxypropylenpolyoxyethylen-polyolen.

### Beispiele

### Herstellung der flüssigen Urethangruppen enthaltenden Polyisocyanatmischungen

### Beispiel 1

Zu 1419,14 Gew.-Teilen einer Mischung aus Diphenylmethan-diisocyanaten und Polyphenyl-polymethylen-polyisocyanaten (Roh-MDI) mit einem NCO-Gehalt von 31 Gew.-% und einem Gehalt von Diphenylmethan-diisocyanat-Isomeren von 39 Gew.-%, bezogen auf das Gesamtgewicht, fügte man unter Rühren bei 60°C, portionsweise, 80,56 Gew.-Teile eines α,β-olefinisch ungesättigten Polyester-diols mit einer Hydroxylzahl von 336, einer Säurezahl von 0,7 und einem Molekulargewichtsfaktor pro Doppelbindung von 262, hergestellt durch Polykondensation von Maleinsäureanhydrid, 1,3-Propandiol und Diethylenglykol im Molverhältnis 1:1:1.

Nach beendeter Zugabe des α,β-olefinisch ungesättigten Polyester-diols wurde die Reaktionsmischung noch eine Stunde bei 80°C gerührt und danach ließ man sie auf Raumtemperatur abkühlen.

Man erhielt eine mit Urethangruppen modifizierte Polyisocyanatmischung mit einem NCO-Gehalt von 27,27 Gew.-% und einer Viskosität bei 25°C von 1830 mPa·s.

### Beispiele 2 bis 5

Man verfuhr analog den Angaben des Beispiels 1, verwendete jedoch eine Mischung aus dem vorgenannten Roh-MDI und einem Gemisch aus 2,4'- und 4,4'-MDI im Gewichtsverhältnis 1 : 1.

Die eingesetzten Gewichtsmengen der Einsatzstoffe und NCO-Gehalte und Viskositäten der hergestellten Urethangruppen enthaltenden Polyisocyanatmischungen sind in der folgenden Tabelle zusammengefaßt.

**Tabelle**

| Beispiel | Mischung aus Roh-MDI und dem Gemisch aus 2,4'- und 4,4'-MDI | | Polyesterdiol | Urethangruppen enthaltende Polyisocyanatmischung | |
|---|---|---|---|---|---|
| | [Gew.-Teile] | [Gew.-Teile] | [Gew.-Teile] | NCO-Gehalt [Gew.-%] | Viskosität bei 25°C [mPa·s] |
| 2 | 570 | 380 | 50 | 29,62 | 354 |
| 3 | 665 | 285 | 50 | 27,76 | 525 |
| 4 | 760 | 190 | 50 | 28,06 | 737,5 |
| 5 | 855 | 95 | 50 | 27,74 | 1244 |

### Beispiel 6

Man verfuhr analog den Angaben des Beispiels 1, verwendete jedoch als Polyisocyanate eine Mischung aus
- 655: Gew.-Teilen Roh-MDI und
- 279: Gew.-Teilen eines Gemisches aus 2,4'- und 4,4'-MDI im Gewichtsverhältnis 1 : 1
und als Polyhydroxylverbindung eine Mischung aus
- 50: Gew.-Teilen des α,β-olefinisch ungesättigten Polyesterdiols gemäß Beispiel 1 und
- 20: Gew.-Teilen eines mit Glycerin gestarteten Polyoxypropylen (25,8 Gew.-%)-polyoxyethylen (74,2 Gew.-%)-polyols mit der OH-Zahl 42.

Die erhaltene Urethangruppen enthaltende Polyisocyanatmischung war homogen und besaß einen NCO-Gehalt von 27,63 Gew.-% und eine Viskosität bei 25°C von 614 mPa·s.

### Beispiel 7

Man verfuhr analog den Angaben des Beispiels 6, verwendete jedoch als Polyisocyanate eine Mischung aus
- 651: Gew.-Teilen Roh-MDI und
- 279: Gew.-Teilen einer Carbodiimidgruppen enthaltenden, 4,4'-MDI-Mischung mit einem NCO-Gehalt von 29,5 Gew.-%.

Man erhielt eine Urethan- und Carbodiimidgruppen enthaltende Polyisocyanatmischung mit einem NCO-Gehalt von 26,5 Gew.-% und einer Viskosität bei 25°C von 1396 mPa·s.

### Beispiel 8

Man verfuhr analog den Angaben des Beispiels 6, verwendete jedoch als Polyisocyanate eine Mischung aus
- 651: Gew.-Teilen Roh-MDI und
- 279: Gew.-Teilen eines Urethangruppen enthaltenden Polyisocyanatgemisches mit einem NCO-Gehalt von 23 Gew.-%, das hergestellt wurde durch Umsetzung von 4,4'-MDI mit einer Mischung aus Dipropylenglykol und einem mit Dipropylenglykol gestarteten Polyoxypropylenglykol der Hydroxylzahl 250.

Man erhielt eine Urethangruppen enthaltende Polyisocyanatmischung mit einem NCO-Gehalt von 25,33 Gew.-% und einer Viskosität bei 25°C von 4490 mPa·s.

### Beispiel 9

Man verfuhr analog den Angaben des Beispiels 6, verwendete jedoch als Polyisocyanate eine Mischung aus
- 651: Gew.-Teilen Roh-MDI und
- 279: Gew.-Teilen 4,4'-MDI.

Man erhielt eine Urethangruppen enthaltende Polyisocyanatmischung mit einem NCO-Gehalt von 27,1 Gew.-% und einer Viskosität bei 25°C von 550,6 mPa·s.

### Beispiel 10

- 1000: Gew.-Teile der Urethangruppen enthaltenden Polyisocyanatmischung gemäß Beispiel 4 und
- 1000: Gew.-Teile einer Urethangruppen enthaltenden Polyisocyanatmischung mit einem NCO-Gehalt von 27,1 Gew.-% und einer Viskosität bei 25°C von 1011 mPa·s, die ihrerseits hergestellt wurde durch Umsetzung von
- 912,14: Gew.-Teilen Roh-MDI gemäß Beispiel 1 und
- 87,86: Gew.-Teilen eines mit Glycerin gestarteten Polyoxypropylen (25,8 Gew.-%)-polyoxyethylen (74,2 Gew.-%)-polyols mit der OH-Zahl 42,
wurden bei 23°C intensiv gemischt.

Man erhielt eine Urethangruppen enthaltende Polyisocyanatmischung mit einem NCO-Gehalt von 27,6 Gew.-% und einer Viskosität bei 25°C von 880 mPa·s.

### Beispiel 11

Zu 1325 Gew.-Teilen 4,4'-Diphenylmethan-diisocyanat fügte man unter Rühren bei 80°C, portionsweise, 331 Gew.-Teile des in Beispiel 1 beschriebenen α,β-olefinisch ungesättigten Polyester-diols der Hydroxylzahl 336.

Nach beendeter Zugabe des α,β-olefinisch ungesättigten Polyesterdiols wurde die Reaktionsmischung noch 1 Stunde lang bei 80°C gerührt und danach auf 25°C abkühlen gelassen.

Die mit Urethangruppen modifizierte Polyisocyanatmischung, die einen NCO-Gehalt von 22,8 Gew.-% und eine Viskosität bei 25°C von 3000 mPa·s besaß, wurde nun unter intensivem Rühren mit 3344 Gew.-Teilen des in Beispiel 1 beschriebenen Roh-MDI's gemischt.

Die hergestellte Urethangruppen enthaltende Polyisocyanatmischung besaß einen NCO-Gehalt von 27,8 Gew.-% und eine Viskosität bei 25°C von 628 mPa·s.

### Beispiel 12

Zu 380 Gew.-Teilen einer Mischung aus 2,4'- und 4,4'-Diphenylmethan-diisocyanat im Gewichtsverhältnis 1 : 1 fügte man unter Rühren bei 80°C, portionsweise, 380 Gew.-Teile eines α,β-olefinisch ungesättigten Polyesterdiols mit der Hydroxylzahl 200, der Säurezahl 3 und dem Molekulargewichtsfaktor pro Doppelbindung von 262, der hergestellt wurde durch Polykondensation von Fumarsäure, 1,3-Propandiol und Diethylenglykol im Molverhältnis von 1 : 1 : 1.

Nach beendeter Zugabe des α,β-olefinisch ungesättigten Polyesterdiols wurde die Reaktionsmischung noch eine Stunde bei 80°C gerührt, auf 50°C abgekühlt und bei dieser Temperatur mit 570 Gew.-Teilen des in Beispiel 1 beschriebenen Roh-MDI's gemischt.

Man erhielt eine Urethangruppen enthaltende Polyisocyanatmischung mit einem NCO-Gehalt von 29,4 Gew.-% und einer Viskosität bei 25°C von 10000 mPa·s.

### Beispiel 13

Man verfuhr analog den Angaben des Beispiels 1, verwendet jedoch als Polyisocyanate eine Mischung aus
- 651: Gew.-Teilen Roh-MDI und
- 279: Gew.-Teilen eines Gemisches aus 2,4'- und 4,4'-MDI im Gewichtsverhältnis 1 : 1
und als Polyhydroxylverbindung eine Mischung aus
- 50: Gew.-Teilen des α,β-olefinisch ungesättigten Polyesterdiols gemäß Beispiel 1 und
- 20: Gew.-Teilen eines mit Trimethylolpropan gestarteten Polyoxyethylen (95 Gew.-%)-polyoxypropylen (5 Gew.-%)-polyols der Hydroxylzahl 101.

Man erhielt eine Urethangruppen enthaltende Polyisocyanatmischung mit einem NCO-Gehalt von 27,7 Gew.-% und einer Viskosität bei 25°C von 652 mPa·s.

### Herstellung der Verbundelemente und der hierfür erfindungsgemäß verwendbaren PU-Schaumstoffe

### Beispiel 14

In ein auf 50°C temperiertes, metallisches Formwerkzeug mit den inneren Abmessungen 20 x 20 x 4 cm wurden gegebenenfalls gefärbte Folien aus PVC/ABS-Polymerisatgemischen oder PVC in einer Weise eingelegt, daß die Grundfläche des Formwerkzeuges vollständig bedeckt war.

Das Formwerkzeug wurde verschlossen, in den Formwerkzeughohlraum die schäumfähige PU-Reaktionsmischung eingefüllt und diese dort aufgeschäumt und ausgehärtet.

Das gebildete Verbundelement wurde nach 3 Minuten entformt. Nach 24-stündiger Lagerung bei 23°C wurde der Verbundkörper in mehrere Prüfkörper zersägt und diese einzeln in Glasflaschen bei 120°C in einem Umlufttrockenschrank gelagert.

Nach jeweils 300 und 500 Stunden Lagerung bei 120°C wurden die Prüfkörper entnommen und die als Deckschicht verwendete Folie vom PU-Schaumstoff mit Hilfe eines Messers abgetrennt.

An der Folie und dem PU-Schaumstoff wurde im Zugversuch nach DIN 53 571 die Reißfestigkeit und Reißdehnung gemessen.

Bei den nachfolgend aufgelisteten Meßergebnissen werden in der Zeile "0 Stunden" die Vergleichswerte für die eingesetzten Folien und den unbeschichteten PU-Schaumstoff nach der 24-stündigen Lagerung bei 23°C genannt.

Der halbharte PU-Schaumstoff wurde unter Verwendung folgender Ausgangsstoffe hergestellt:

### A-Komponente:

Mischung, bestehend aus
- 87,7: Gew.-Teilen eines mit Glycerin gestarteten Polyoxypropylen (86 Gew.-%)-polyoxyethylen (14 Gew.-%)-polyols der Hydroxylzahl 28 (Lupranol® 2040 der BASF Aktiengesellschaft),
- 5,0: Gew.-Teilen eines Pfropf-polyether-polyols mit der Hydroxylzahl 28, bestehend aus einem mit Glycerin gestarteten Polyoxypropylen (84 Gew.-%)-polyoxyethylen (16 Gew.-%)-polyol, auf das 20 Gew.-% einer Mischung aus Acrylnitril und Styrol im Gewichtsverhältnis 40 : 60 aufgepfropft wurde (Polyurax® U2603 der BP, Deutschland),
- 2,0: Gew.-Teilen Glycerin (98 gew.-%ig),
- 2,2: Gew.-Teilen Wasser,
- 1,5: Gew.-Teilen Kaliumacetat (40 gew.-%ig in Ethylenglykol und
- 1,6: Gew.-Teilen Ricinolsäure.

### B-Komponente:

Urethangruppen enthaltende Polyisocyanatmischung, hergestellt gemäß Beispiel 1.

Zur Herstellung des PU-Schaumstoffs wurden
- 100: Gew.-Teile der A-Komponente und
- 58,7: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Zusätzlich wurde die Reaktionsmischung in einem offenen Kunststoffbecher aufgeschäumt und hierbei folgende Schäumdaten gemessen:
- Startzeit:: 31 Sek.
- Abbindezeit:: 67 Sek.
- Steigzeit:: 94 Sek.

An den zur Herstellung der Verbundelemente verwendeten Deckschichten wurden folgende Meßergebnisse ermittelt:

| Folienmaterial der Deckschicht | Lagerung bei 120°C [Std.] | Reißfestigkeit [N/mm²] | Reißdehnung [%] |
|---|---|---|---|
| PVC/ABS-Polymerisatgemisch, blau eingefärbt | 0 | 9,18 | 99 |
| | 300 | 16,34 | 138 |
| | 500 | 16,47 | 75 |
| PVC/ABS-Polymerisatgemisch, grau eingefärbt | 0 | 12,1 | 103 |
| | 300 | 15,2 | 129 |
| | 500 | 16,3 | 71 |
| PVC/ABS-Polymerisatgemisch, schwarz einfärbt | 0 | 10,7 | 91 |
| | 300 | 17 | 127 |
| | 500 | 14,8 | 91 |
| PVC-slush | 0 | 12 | 319 |
| | 300 | 11 | 234 |
| | 500 | 20 | 195 |

### Beispiel 15

Man verfuhr analog den Angaben des Beispiels 14

### A-Komponente:

analog Beispiel 14

### B-Komponente:

Urethangruppen enthaltende Polyisocyanatmischung, hergestellt gemäß Beispiel 2.

Zur Herstellung des PU-Schaumstoffs wurden
- 100: Gew.-Teile der A-Komponente und
- 55,35: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 29 Sek.
- Abbindezeit:: 81 Sek.
- Steigzeit:: 133 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 13,52 | 169,84 |
| | 300 | 18,02 | 174,60 |
| | 500 | 15,05 | 76,40 |
| PU-Schaumstoff | 0 | 0,32 | 63,66 |
| | 300 | 0,22 | 33,44 |
| | 500 | 0,21 | 22,04 |

### Beispiel 16

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 3.

Zur Herstellung des PU-Schaumstoffs wurden
- 100: Gew.-Teile der A-Komponente und
- 58,93: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 30 Sek.
- Abbindezeit:: 79 Sek.
- Steigzeit:: 128 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 13,89 | 176,0 |
| | 300 | 17,87 | 189,8 |
| | 500 | 15,71 | 76,0 |
| PU-Schaumstoff | 0 | 0,33 | 57,02 |
| | 300 | 0,32 | 30,64 |
| | 500 | 0,28 | 22,44 |

### Beispiel 17

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 4.

Zur Herstellung des PU-Schaumstoffs wurden
- 100: Gew.-Teile der A-Komponente und
- 58,30: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 30 Sek.
- Abbindezeit:: 78 Sek.
- Steigzeit:: 123 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 14,66 | 172,0 |
| | 300 | 18,54 | 187,7 |
| | 500 | 15,13 | 87,3 |
| PU-Schaumstoff | 0 | 0,33 | 51,64 |
| | 300 | 0,22 | 28,64 |
| | 500 | 0,20 | 20,24 |

### Beispiel 18

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 5.

Zur Herstellung des PU-Schaumstoffs wurden
- 100: Gew.-Teile der A-Komponente und
- 59,14: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 28 Sek.
- Abbindezeit:: 79 Sek.
- Steigzeit:: 120 Sek.

| Bestandteile des Verbundelementes | Lagerung bei 120°C [Std.] | Reißfestigkeit [N/mm²] | Reißdehnung [%] |
|---|---|---|---|
| a) Folie aus einem PVC/ABS-Polymerisatgemisch, grau eingefärbt | 0 | 13,29 | 166,64 |
| | 300 | 17,18 | 155,40 |
| | 500 | 13,38 | 74,80 |
| a) PU-Schaumstoff | 0 | 0,29 | 48,72 |
| | 300 | 0,19 | 26,20 |
| | 500 | 0,17 | 19,28 |
| b) Folie aus einem PVC/ABS-Polymerisatgemisch, schweden-weinrot eingefärbt | 0 | 19,40 | 137,12 |
| | 300 | 18,50 | 101,1 |
| | 500 | 13,69 | 64,7 |
| a) PU-Schaumstoff | 0 | 0,29 | 49,68 |
| | 300 | 0,24 | 37,68 |
| | 500 | 0,22 | 32,12 |

### Beispiel 19

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 6.

Zur Herstellung des PU-Schaumstoffs wurden
- 100: Gew.-Teile der A-Komponente und
- 59,36: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 31 Sek.
- Abbindezeit:: 76 Sek.
- Steigzeit:: 126 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 12,56 | 168,24 |
| | 300 | 19,10 | 174,76 |
| | 500 | 15,43 | 76,50 |
| PU-Schaumstoff | 0 | 0,32 | 56,64 |
| | 300 | 0,24 | 35,92 |
| | 500 | 0,22 | 24,96 |

### Beispiel 20

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 7.

Zur Herstellung des PU-Schaumstoffs wurden
- 100: Gew.-Teile der A-Komponente und
- 61,82: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 31 Sek.
- Abbindezeit:: 78 Sek.
- Steigzeit:: 114 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 15,52 | 162,36 |
| | 300 | 14,90 | 176,50 |
| | 500 | 17,27 | 105,10 |
| PU-Schaumstoff | 0 | 0,29 | 53,52 |
| | 300 | 0,19 | 30,44 |
| | 500 | 0,21 | 25,12 |

### Beispiel 21

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 8.

Zur Herstellung des PU-Schaumstoffs wurden
- 100: Gew.-Teile der A-Komponente und
- 67,7: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 30 Sek.
- Abbindezeit:: 76 Sek.
- Steigzeit:: 128 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 14,58 | 151,84 |
| | 300 | 15,79 | 177,4 |
| | 500 | 15,18 | 112,0 |
| PU-Schaumstoff | 0 | 0,34 | 51,44 |
| | 300 | 0,22 | 29,76 |
| | 500 | 0,22 | 24,16 |

### Beispiel 22

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 13.

Zur Herstellung des PU-Schaumstoffs wurden
- 100: Gew.-Teile der A-Komponente und
- 59,14: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 29 Sek.
- Abbindezeit:: 78 Sek.
- Steigzeit:: 123 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 14,13 | 154,48 |
| | 300 | 16,00 | 168,80 |
| | 500 | 19,05 | 83,50 |
| PU-Schaumstoff | 0 | 0,29 | 53,52 |
| | 300 | 0,19 | 36,72 |
| | 500 | 0,18 | 30,88 |

### Beispiel 23

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 9.

Zur Herstellung des PU-Schaumstoffs wurden
- 100: Gew.-Teile der A-Komponente und
- 60,45: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 30 Sek.
- Abbindezeit:: 75 Sek.
- Steigzeit:: 121 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 14,90 | 158,88 |
| | 300 | 15,58 | 168,70 |
| | 500 | 16,09 | 94,00 |
| PU-Schaumstoff | 0 | 0,30 | 51,52 |
| | 300 | 0,25 | 34,48 |
| | 500 | 0,24 | 27,84 |

### Beispiel 24

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 10.

Zur Herstellung des PU-Schaumstoffs wurden
- 100: Gew.-Teile der A-Komponente und
- 59,36: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 31 Sek.
- Abbindezeit:: 76 Sek.
- Steigzeit:: 119 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 15,30 | 171,92 |
| | 300 | 18,15 | 178,10 |
| | 500 | 16,74 | 96,40 |
| PU-Schaumstoff | 0 | 0,26 | 50,48 |
| | 300 | 0,15 | 37,16 |
| | 500 | 0,14 | 31,36 |

### Beispiel 25

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 11.

Zur Herstellung des PU-Schaumstoffs wurden
- 100: Gew.-Teile der A-Komponente und
- 59,10: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 23 Sek.
- Abbindezeit:: 56 Sek.
- Steigzeit:: 104 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 11,12 | 150,72 |
| | 300 | 17,31 | 180,80 |
| | 500 | 14,80 | 97,70 |
| PU-Schaumstoff | 0 | 0,31 | 46,16 |
| | 300 | 0,30 | 27,52 |
| | 500 | 0,23 | 24,12 |

### Beispiel 26

Man verfuhr analog den Angaben des Beispiels 14.

### A-Komponente:

analog Beispiel 14

### B-Komponente:

Urethangruppen enthaltende Polyisocyanatmischung, hergestellt gemäß Beispiel 12.

Zur Herstellung des PU-Schaumstoffs wurden
- 100: Gew.-Teile der A-Komponente und
- 59,10: Gew.-Teile der B-Komponente
bei 23°C intensiv durch Rühren gemischt und 250 g der Reaktionsmischung in das Formwerkzeug eingefüllt und dort aufgeschäumt und ausgehärtet.

Bei der Aufschäumung in einem offenen Kunststoffbecher wurden folgende Schaumdaten gemessen:
- Startzeit:: 24 Sek.
- Abbindezeit:: 60 Sek.
- Steigzeit:: 120 Sek.

| Bestandteile des Verbundelementes | Lagerung bei 120°C [Std.] | Reißfestigkeit [N/mm²] | Reißdehnung [%] |
|---|---|---|---|
| Folie aus einem PVC/ABS-Polymerisatgemisch, grau eingefärbt | 0 | 11,10 | 150,60 |
| | 300 | 16,80 | 160,00 |
| | 500 | 14,0 | 80,00 |
| PU-Schaumstoff | 0 | 0,28 | 40,00 |
| | 300 | 0,26 | 38,80 |
| | 500 | 0,18 | 34,30 |

### Beispiel 27

Man verfuhr analog den Angaben des Beispiels 14

### A-Komponente:

analog Beispiel 14

### B-Komponente:

Zu 1395 Gew.-Teilen 4,4'-Diphenylmethan-diisocyanat fügte man unter Rühren bei 60°C, portionsweise, eine Mischung, bestehend aus
- 250: Gew.-Teilen des in Beispiel 1 beschriebenen α,β-olefinisch ungesättigten Polyesters und
- 100: Gew.-Teilen eines mit Glycerin gestarteten Polyoxypropylen(25,8 Gew.-%)-polyoxyethylen (74,2 Gew.-%)-polyols mit der Hydroxylzahl von 42.

Die Reaktionsmischung wurde danach 1 Stunde bei 80°C gerührt, auf 50°C abgekühlt und bei dieser Temperatur mit
- 3255: Gew.-Teilen Roh-MDI gemäß Beispiel 1 intensiv gemischt.

Man erhielt eine Urethangruppen enthaltende Polyisocyanatmischung mit einem NCO-Gehalt von 27,62 Gew.-% und einer Viskosität bei 25°C von 478 mPa·s.

Zur Herstellung des PU-Schaumstoffs wurden
100 Gew.-Teile der A-Komponente und
59,03 Gew.-Teile der B-Komponente
bei 23°C intensiv durch Rühren gemischt und 250 g der Reaktionsmischung in das Formwerkzeug eingefüllt und dort aufschäumen und aushärten gelassen.

Bei der Aufschäumung in einem offenen Kunststoffbecher wurden folgende Schaumdaten gemessen
- Startzeit:: 23 Sek.
- Abbindezeit:: 76 Sek.
- Steigzeit:: 123 Sek.

| Bestandteile des Verbundelementes | Lagerung bei 120°C [Std.] | Reißfestigkeit [N/mm] | Reißdehnung [%] |
|---|---|---|---|
| Folie aus einem PVC/ABS-Polymerisatgemisch, grau eingefärbt | 0 | 14,95 | 167,8 |
| | 300 | 18,14 | 165,3 |
| | 500 | 20,08 | 106,2 |
| PU-Schaumstoff | 0 | 0,33 | 57,02 |
| | 300 | 0,32 | 31,20 |
| | 500 | 0,28 | 28,50 |

### Beispiel 28

100 Gew.-Teilen eines Mikrosuspensions-PVC mit einem K-Wert von 80 wurden 40 Gew.-Teile Dibutylphthalat als Weichmacher und 5 Gew.-Teile eines kristallinen α,β-olefinisch ungesättigten Polyesters mit einer Hydroxylzahl von 179, einer Säurezahl von 4,4, einem Schmelzpunkt von 80 bis 85°C (aus Ethanol) und einem Molekulargewichtsfaktor pro Doppelbindung von 163,7, der hergestellt wurde durch Polykondensation von Fumarsäure und Ethandiol im Molverhältnis 1 : 1,35, einverleibt.

Aus dem erhaltenen Plastisol wurde eine Folie hergestellt analog dem im Kunststoffhandbuch, Band II, Teil 2, Seiten 1078 bis 1098, beschriebenen Verfahren (herausgegeben von Dr. G. Becker und Dr. D. Braun, Carl Hanser Verlag, München, Wien, 1986.

Die erhaltene PVC-Folie wurde analog den Angaben des Beispiels 14 hinterschäumt.

An dem erhaltenen Verbundelement wurden folgende mechanische Eigenschaften gemessen:

| Bestandteile des Verbundelementes | Lagerung bei 120°C [Stdn] | Reißfestigkeit [N/mm²] | Reißdehnung [%] |
|---|---|---|---|
| Folie gemäß Beispiel 28 | 0 | 12,62 | 252,88 |
| | 300 | 14,68 | 210,57 |
| | 500 | 13,10 | 207,20 |
| PU-Schaumstoff | 0 | 0,29 | 48,30 |
| | 300 | 0,28 | 28,30 |
| | 500 | 0,24 | 39,44 |

## Patentansprüche

1. Verbundelement, bestehend aus
A) mindestens einer Deckschicht aus Polyvinylchlorid oder einem polyvinylchloridhaltigen Polymerisatgemisch und
B) einem Polyurethanschaumstoff,
dadurch gekennzeichnet, daß das Polyvinylchlorid oder das polyvinylchloridhaltige Polymerisatgemisch der Deckschicht (A), der Polyurethanschaumstoff (B) oder (A) und (B) Einheiten eines α,β-olefinisch ungesättigten Polyesters mit
einer Funktionalität von 2 bis 6,
einer Hydroxylzahl von 180 bis 800,
einer Säurezahl von 0 bis 15 und
einem Molekulargewichtsfaktor pro Doppelbindung von 150 bis 3000 enthalten.

2. Verbundelement nach Anspruch 1, dadurch gekennzeichnet, daß das Polyvinylchlorid oder das polyvinylchloridhaltige Polymerisatgemisch der Deckschicht (A), der Polyurethanschaumstoff (B) oder (A) und (B) Einheiten eines α,β-olefinisch ungesättigten Polyesters mit einem Molekulargewichtsfaktor pro Doppelbindung von 150 bis 3000 in einer Menge von 1 bis 30 Gew.-%, bezogen auf das Gewicht von (A) oder (B), enthält.

3. Verbundelement nach Anspruch 1, dadurch gekennzeichnet, daß die Deckschicht (A) aus Polyvinylchlorid oder einem polyvinylchloridhaltigen Polymerisatgemisch einen pastösen oder über 30°C erweichenden α,β-olefinisch ungesättigten Polyester in einer Menge von 5 bis 30 Gew.-%, bezogen auf das Gewicht von (A) incorporiert enthält.

4. Verbundelemente nach Anspruch 1, dadurch gekennzeichnet, daß zur Herstellung des Polyurethanschaumstoffs (B) bei 23°C flüssige, α,β-olefinisch ungesättigte Polyester verwendet werden und diese im Polyurethanschaumstoff gebunden sind.

5. Verbundelement nach Anspruch 1, dadurch gekennzeichnet, daß die Polyurethanschaumstoffe (B) halbhart oder hart sind.

6. Verbundelement, bestehend aus
A) mindestens einer Deckschicht aus Polyvinylchlorid oder einem polyvinylchloridhaltigen Polymerisatgemisch und
B) einem Polyurethanschaumstoff,
dadurch gekennzeichnet, daß der Polyurethanschaumstoff (B) hergestellt wird durch Umsetzung
a) einer Urethangruppen enthaltenden Polyisocyanatmischung auf Diphenylmethan-diisocyanat-basis mit einem Gehalt an NCO-Gruppen von 15 bis 32 Gew.-%, die ihrerseits erhältlich ist durch Umsetzung von
Diphenylmethan-diisocyanat-Isomeren oder einer Mischung aus Diphenylmethan-diisocyanat-Isomeren und Polyphenyl-polymethylen-polyisocyanaten mit
mindestens einem α,β-olefinisch ungesättigten Polyester mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15 oder einer Mischung aus dem obengenannten α,β-olefinisch ungesättigten Polyester und einem Polyoxyalkylen-polyol mit einer Funktionalität von 2 bis 4 und einer Hydroxylzahl von 20 bis 400 mit
b) mindestens einer höhermolekularen Polyhydroxylverbindung mit mindestens zwei reaktiven Wasserstoffatomen und
c) gegebenenfalls Kettenverlängerungs- und/oder Vernetzungsmitteln in Gegenwart von
d) Treibmitteln,
e) Katalysatoren und gegebenenfalls
f) Hilfsmitteln und/oder Zusatzstoffen.

7. Verbundelement nach Anspruch 6, dadurch gekennzeichnet, daß die Polyurethanschaumstoffe (B) in Abwesenheit von Verbindungen mit tertiären Aminogruppen hergestellt werden.

8. Verfahren zur Herstellung eines Verbundelements, bestehend aus
A) mindestens einer Deckschicht aus Polyvinylchlorid oder einem polyvinylchloridhaltigen Polymerisatgemisch und
B) einem Polyurethanschaumstoff,
dadurch gekennzeichnet, daß man die Deckschicht (A) oder die α,β-olefinisch ungesättigte Polyester enthaltende Deckschicht (A) so in ein Formwerkzeug einlegt, daß dessen innere Oberfläche teilweise oder vollständig bedeckt ist,
danach die Reaktionsmischung, die mindestens einen α,β-olefinisch ungesättigten Polyester gebunden enthält oder nicht enthält, zur Bildung des Polyurethanschaumstoffs in das Formwerkzeug einbringt und dort aufschäumen und aushärten läßt
mit der Maßgabe, daß mindestens einer der Bestandteile (A) oder (B) des Verbundelements einen α,β-ungesättigten Polyester mit einem Molekulargewichtsfaktor pro Doppelbindung von 150 bis 3000 enthält.

9. Flüssige, Urethangruppen enthaltende Polyisocyanatmischungen auf Diphenylmethan-diisocyanat-basis mit einem Gehalt an Isocyanatgruppen von 15 bis 32 Gew.-%, erhalten durch Umsetzung
einer Mischung aus Diphenylmethan-diisocyanaten und Polyphenyl-polymethylen-polyisocyanaten mit
mindestens einem α,β-olefinisch ungesättigten Polyester mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15 oder einer Mischung aus mindestens einem der oben genannten α,β-olefinisch ungesättigten Polyestern und mindestens einem Polyoxyalkylen-polyol mit einer Funktionalität von 2 bis 4 und einer Hydroxylzahl von 20 bis 400 oder
durch Umsetzung von 4, 4'-Diphenylmethan-diisocyanat oder einer Mischung aus Diphenylmethan-diisocyanat-Isomeren, vorzugsweise einer Mischung aus 4,4'- und 2,4'-Diphenylmethan-diisocyanaten, mit
mindestens einem der obengenannten α,β-olefinisch ungesättigten Polyestern oder
einer Mischung aus mindestens einem der obengenannten α,β-olefinisch ungesättigten Polyester und mindestens einem Polyoxyalkylen-polyol mit einer Funktionalität von 2 bis 4 und einer Hydroxylzahl von 20 bis 400 und
anschließendem Verdünnen des erhaltenen Urethangruppen enthaltenden Reaktionsproduktes mit einer Mischung aus Diphenylmethan-diisocyanaten und Polyphenyl-polymethylen-polyisocyanaten.

10. Flüssige, Urethangruppen enthaltende Polyisocyanatmischungen nach Anspruch 9, dadurch gekennzeichnet, daß die Mischungen aus Diphenylmethan-diisocyanaten und Polyphenyl-polymethylen-polyisocyanaten einem Diphenylmethan-diisocyanatgehalt von 30 bis 70 Gew.-% besitzen.

11. Flüssige, Urethangruppen enthaltende Polyisocyanatmischungen nach Anspruch 9, dadurch gekennzeichnet, daß die Mischung aus Diphenylmethan-diisocyanat-Isomeren enthält
48 bis 96 Gew.-% 4,4'-Diphenylmethan-diisocyanat,
52 bis 2 Gew.-% 2,4'-Diphenylmethan-diisocyanat und
0 bis 2 Gew.-% 2,2'-Diphenylmethan-diisocyanat.

12. Flüssige, Urethangruppen enthaltende Polyisocyanatmischungen nach Anspruch 9, dadurch gekennzeichnet, daß die Polyoxyalkylen-polyole eine Funktionalität von 2 bis 3 besitzen und bestehen aus Polyoxypropylen-polyolen oder Polyoxypropylen-polyoxyethylen-polyolen.

13. Flüssige Urethangruppen enthaltende Polyisocyanatmischungen nach Anspruch 9, dadurch gekennzeichnet, daß die Diphenylmethan-diisocyanate oder Mischungen aus Diphenylmethan-diisocyanaten und Polyphenyl-polymethylen-polyisocyanaten und die α,β-olefinisch ungesättigten Polyester oder Mischungen aus α,β-olefinisch ungesättigten Polyestern und Polyoxyalkylen-polyolen in solchen Mengen zur Reaktion gebracht werden, daß das Verhältnis von NCO-Gruppen zu OH-Gruppen größer als 2 ist.

## Claims

1. A composite element comprising
A) at least one top layer of polyvinyl chloride or a polyvinyl chloride-containing polymer mixture, and
B) a polyurethane foam,
wherein the polyvinyl chloride or polyvinyl chloride-containing polymer mixture of the top layer (A), the polyurethane foam (B), or (A) and (B) contain units of an α,β-olefinically unsaturated polyester having
a functionality of from 2 to 6,
a hydroxyl number of from 180 to 800,
an acid number of from 0 to 15 and
a molecular weight factor per double bond of from 150 to 3000.

2. A composite element as claimed in claim 1, wherein the polyvinyl chloride or polyvinyl chloride-containing polymer mixture of the top layer (A), the polyurethane foam (B), or (A) and (B) contains units of an α,β-olefinically unsaturated polyester having a molecular weight factor per double bond of from 150 to 3000 in an amount of from 1 to 30 % by weight, based on the weight of (A) or (B).

3. A composite element as claimed in claim 1, wherein the top layer (A) of polyvinyl chloride or a polyvinyl chloride-containing polymer mixture contains an incorporated α,β-olefinically unsaturated polyester which softens at above 30°C or is pasty in an amount of from 5 to 30 % by weight, based on the weight of (A).

4. A composite element as claimed in claim 1, wherein the polyurethane foam (B) is prepared using an α,β-olefinically unsaturated polyester which is liquid at 23°C and by bonding the latter in the polyurethane foam.

5. A composite element as claimed in claim 1, wherein the polyurethane foam (B) is semirigid or rigid.

6. A composite element comprising
A) at least one top layer of polyvinyl chloride or a polyvinyl chloride-containing polymer mixture, and
B) a polyurethane foam,
wherein the polyurethane foam (B) is prepared by reacting
a) a urethane-containing, diphenylmethane diisocyanate-based polyisocyanate mixture containing from 15 to 32 % by weight of NCO groups, this mixture itself being obtainable by reacting
a diphenylmethane diisocyanate isomer or a mixture of diphenylmethane diisocyanate isomers and a polyphenyl-polymethylene polyisocyanate with
at least one α,β-olefinically unsaturated polyester having a molecular weight factor per double bond of from 150 to 3000, a functionality of from 2 to 6, a hydroxyl number of from 20 to 800 and an acid number of from 0 to 15, or a mixture of said α,β-olefinically unsaturated polyester and a polyoxyalkylenepolyol having a functionality of from 2 to 4 and a hydroxyl number of from 20 to 400, with
b) at least one relatively high-molecular-weight polyhydroxyl compound containing at least two reactive hydrogen atoms and
c) if desired chain extenders and/or crosslinking agents, in the presence of
d) a blowing agent,
e) a catalyst and, if desired,
f) assistants and/or additives.

7. A composite element as claimed in claim 6, wherein the polyurethane foam (B) is prepared in the absence of compounds containing tertiary amino groups.

8. A process for the production of a composite element comprising
A) at least one top layer of polyvinyl chloride or a polyvinyl chloride-containing polymer mixture, and
B) a polyurethane foam,
which comprises laying the top layer (A) or the α,β-olefinically unsaturated polyester-containing top layer (A) into a mold in such a manner that its inner surface is partially or fully covered,
then introducing the reaction mixture which may contain at least one α,β-olefinically unsaturated polyester in bonded form, into the mold in order to form the polyurethane foam, and allowing the mixture to foam and cure therein,
with the proviso that at least one of the constituents (A) and (B) of the composite element contains an α,β-unsaturated polyester having a molecular weight factor per double bond of from 150 to 3000.

9. A liquid, urethane-containing, diphenylmethane diisocyanate-based polyisocyanate mixture containing from 15 to 32 % by weight of isocyanate groups, obtained by reacting
a mixture of a diphenylmethane diisocyanate and a polyphenyl-polymethylene polyisocyanate with
at least one α,β-olefinically unsaturated polyester having a molecular weight factor per double bond of from 150 to 3000, a functionality of from 2 to 6, a hydroxyl number of from 20 to 800 and an acid number of from 0 to 15, or
a mixture of at least one of said α,β-olefinically unsaturated polyesters and at least one polyoxyalkylene-polyol having a functionality of from 2 to 4 and a hydroxyl number of from 20 to 400, or
by reacting 4,4'-diphenylmethane diisocyanate or a mixture of diphenylmethane diisocyanate isomers, preferably a mixture of 4,4'- and 2,4'-diphenylmethane diisocyanates, with at least one of said α,β-olefinically unsaturated polyesters, or
a mixture of at least one of said α,β-olefinically unsaturated polyesters and at least one polyoxyalkylene-polyol having a functionality of from 2 to 4 and a hydroxyl number of from 20 to 400, and
subsequently diluting the urethane-containing reaction product obtained with a mixture of diphenylmethane diisocyanate and polyphenyl-polymethylene polyisocyanate.

10. A liquid, urethane-containing polyisocyanate mixture as claimed in claim 9, wherein the mixture of diphenylmethane diisocyanate and polyphenyl-polymethylene polyisocyanate has a diphenylmethane diisocyanate content of from 30 to 70 % by weight.

11. A liquid, urethane-containing polyisocyanate mixture as claimed in claim 9, wherein the mixture of diphenylmethane diisocyanate isomers contains
from 48 to 96 % by weight of 4,4'-diphenylmethane diisocyanate,
from 52 to 2 % by weight of 2,4'-diphenylmethane diisocyanate and
from 0 to 2 % by weight of 2,2'-diphenylmethane diisocyanate.

12. A liquid, urethane-containing polyisocyanate mixture as claimed in claim 9, wherein the polyoxyalkylene-polyol has a functionality of from 2 to 3 and comprises polyoxypropylene-polyols or polyoxypropylene-polyoxyethylene-polyols.

13. A liquid, urethane-containing polyisocyanate mixture as claimed in claim 9, wherein the diphenylmethane diisocyanate or the mixture of diphenylmethane diisocyanate and polyphenyl-polymethylene polyisocyanate and the α,β-olefinically unsaturated polyester or the mixture of α,β-olefinically unsaturated polyester and polyoxyalkylene-polyol are reacted in such amounts that the NCO:OH group ratio is greater than 2.

## Revendications

1. Stratifié ou lamifié, qui se compose
A) d'au moins une couche de couverture en poly(chlorure de vinyle) ou en un mélange de polymères contenant du poly(chlorure de vinyle), et
B) d'une mousse de polyuréthanne,
caractérisé en ce que le poly(chlorure de vinyle) ou le mélange de polymères contenant du poly(chlorure de vinyle) de la couche de couverture (A), la mousse de polyuréthanne (B) ou bien (A) et (B) contiennent des unités d'un polyester α,β-oléfiniquement insaturé avec
une fonctionnalité de 2 à 6,
un indice d'hydroxyle de 180 à 800,
un indice d'acide de 0 à 15, et
un facteur de poids moléculaire par double liaison de 150 à 3000.

2. Stratifié ou lamifié suivant la revendication 1, caractérisé en ce que le poly(chlorure de vinyle) ou le mélange de polymères contenant du poly(chlorure de vinyle) de la couche de couverture (A), la mousse de polyuréthanne (B) ou bien (A) et (B) contiennent des unités d'un polyester α,β-oléfiniquement insaturé d'un facteur de poids moléculaire par double liaison de 150 à 3000 en une proportion de 1 à 30% en poids, par rapport au poids de (A) ou de (B).

3. Stratifié ou lamifié suivant la revendication 1, caractérisé en ce que la couche de couverture (A) en poly(chlorure de vinyle) ou en un mélange de polymères contenant du poly(chlorure de vinyle) contient en incorporation un polyester α,β-oléfiniquement insaturé, pâteux ou se ramollissant au-delà de 30°C, en une proportion de 5 à 30% en poids, par rapport au poids de (A).

4. Stratifié ou lamifié suivant la revendication 1, caractérisé en ce qu'en vue de la préparation de la mousse de polyuréthanne (B), on utilise des polyesters α,β-oléfiniquement insaturés liquides à 23°C et on lie ceux-ci à la mousse de polyuréthanne.

5. Stratifié ou lamifié suivant la revendication 1, caractérisé en ce que les mousses de polyuréthanne (B) sont dures ou semi-dures.

6. Stratifié ou lamifié qui se compose
A) d'au moins une couche de couverture en poly(chlorure de vinyle) ou en un mélange de polymères contenant du poly(chlorure de vinyle), et
B) d'une mousse de polyuréthanne,
caractérisé en ce que l'on prépare la mousse de polyuréthanne (B) par la réaction
a) d'un mélange de polyisocyanates contenant des radicaux uréthanne à base de diisocyanate de diphénylméthane d'une teneur en radicaux NCO de 15 à 32% en poids, que l'on obtient, à son tour, par la réaction
d'isomères du diisocyanate de diphénylméthane, ou d'un mélange d'isomères du diisocyanate de diphénylméthane et de polyphényl-polyméthylène-polyisocyanates, avec
au moins un polyester α,β-oléfiniquement insaturé avec un facteur de poids moléculaire par double liaison de 150 à 3000, une fonctionnalité de 2 à 6, un indice d'hydroxyle de 20 à 800 et un indice d'acide de 0 à 15 ou un mélange du polyester α,β-oléfiniquement insaturé susmentionné et d'un polyoxyalkylène-polyol d'une fonctionnalité de 2 à 4 et d'un indice d'hydroxyle de 20 à 400,
avec
b) au moins un composé polyhydroxylé de poids moléculaire élevé avec au moins deux atomes d'hydrogène réactifs, et
c) éventuellement des agents d'allongement de chaînes et/ou de réticulation, en présence
d) d'agents porogène,
e) de catalyseurs, et éventuellement,
f) d'adjuvants et/ou d'additifs.

7. Stratifié ou lamifié suivant la revendication 6, caractérisé en ce que l'on prépare les mousses de polyuréthanne (B) en l'absence de composés avec des radicaux amino tertiaires.

8. Procédé de préparation d'un stratifié ou lamifié, qui se compose
A) d'au moins une couche de couverture en poly(chlorure de vinyle) ou en un mélange de polymères contenant du poly(chlorure de vinyle), et
B) d'une mousse de polyuréthanne,
caractérisé en ce que l'on introduit la couche de couverture (A) ou la couche de couverture (A) contenant le polyester α,β-oléfiniquement insaturé dans un outil de moulage en une manière telle que sa surface interne soit partiellement ou totalement recouverte,
ensuite, on introduit dans l'outil de moulage le mélange réactionnel, qui ne contient pas ou qui contient en liaison au moins un polyester α,β-oléfiniquement insaturé, en vue de la formation de la mousse de polyuréthanne dans l'outil de moulage et on l'y laisse mousser et durcir,
avec la condition qu'au moins l'un des composants (A) et (B) du stratifié ou lamifié contienne un polyester α,β-insaturé d'un facteur de poids moléculaire par double liaison de 150 à 3000.

9. Mélanges de polyisocyanates contenant des radicaux uréthanne, liquides, à base de diisocyanate de diphénylméthane, d'une teneur en radicaux isocyanate de 15 à 32% en poids, obtenus par la réaction
d'un mélange de diisocyanate de diphénylméthane et de polyphényl-polyméthylène-polyisocyanates avec
au moins un polyester α,β-oléfiniquement insaturé d'un facteur de poids moléculaire par double liaison de 150 à 3000, d'une fonctionnalité de 2 à 6, d'un indice d'hydroxyle de 20 à 800 et d'un indice d'acide de 0 à 15, ou
un mélange d'au moins l'un des polyesters α,β-oléfiniquement insaturés susmentionnés et d'au moins un polyoxyalkylènepolyol d'une fonctionnalité de 2 à 4 et d'un indice d'hydroxyle de 20 à 400, ou
par la réaction du diisocyanate de 4,4'-diphénylméthane ou d'un mélange d'isomères du diisocyanate de diphénylméthane, de préférence, un mélange de diisocyanates de 4,4'- et 2,4'-diphénylméthane, avec au moins l'un des polyesters α,β-oléfiniquement insaturés susmentionnés, ou
un mélange d'au moins un des polyesters α,β-oléfiniquement insaturés susmentionnés, et d'au moins un polyoxyalkylène-polyol d'une fonctionnalité de 2 à 4 et d'un indice d'hydroxyle de 20 à 400, et
dilution subséquente du produit de la réaction contenant des radicaux uréthanne ainsi obtenu avec un mélange de diisocyanates de diphénylméthane et de polyphényl-polyméthylène-polyisocyanate.

10. Mélanges de polyisocyanates contenant des radicaux uréthanne, liquides, suivant la revendication 9, caractérisés en ce que les mélanges de diisocyanates de diphénylméthane et de polyphényl-polyméthylène-polyisocyanates contiennent une teneur en diisocyanate de diphénylméthane de 30 à 70% en poids.

11. Mélanges de polyisocyanates contenant des radicaux uréthanne, liquides, suivant la revendication 9, caractérisés en ce que le mélange d'isomères du diisocyanate de diphénylméthane contient
48 à 96% en poids de diisocyanate de 4,4'-diphénylméthane,
52 à 2% en poids de diisocyanate de 2,4'-diphénylméthane, et
0 à 2% en poids de diisocyanate de 2,2'-diphénylméthane.

12. Mélanges de polyisocyanates contenant des radicaux uréthanne, liquides, suivant la revendication 9, caractérisés en ce que les polyoxyalkylène-polyols possèdent une fonctionnalité de 2 à 3 et se composent de polyoxypropylène-polyols ou de polyoxypropylène-polyoxyéthylène-polyols.

13. Mélanges de polyisocyanates contenant des radicaux uréthanne, liquides, suivant la revendication 9, caractérisés en ce que les diisocyanates de diphénylméthane ou les mélanges de diisocyanates de diphénylméthane et de polyphényl-polyméthylène-polyisocyanates et les polyesters α,β-oléfiniquement insaturés, ou les mélanges de polyesters α,β-oléfiniquement insaturés et de polyoxyalkylène-polyols sont mis en réaction en proportions telles que le rapport des radicaux NCO aux radicaux OH soit supérieur à 2.
